Europäisches Patentamt

European Patent Office

Office européen des brevets

(19)

(11) **EP 1 361 421 A1**

(12) **DEMANDE DE BREVET EUROPEEN**

(43) Date de publication:
**12.11.2003 Bulletin 2003/46**

(51) Int Cl.⁷: **G01L 5/16**

(21) Numéro de dépôt: **03291080.4**

(22) Date de dépôt: **05.05.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **10.05.2002 FR 0205804**

(71) Demandeur: **S.N.R. ROULEMENTS**
**74010 Annecy Cédex (FR)**

(72) Inventeurs:
• **Salou, Arnaud**
**44600 Saint-Nazaire (FR)**
• **Blanchin, Olivier**
**74000 Annecy (FR)**

(74) Mandataire: **Geismar, Thierry**
**Bouju Derambure Bugnion,**
**52, rue de Monceau**
**75008 Paris (FR)**

(54) **Procédé de calcul des efforts appliqués entre un élement tournant et un support sur lequel il tourne**

(57) L'invention concerne un procédé de calcul des efforts ($F_{xw}$, $F_{yw}$, $F_{zw}$) appliqués à une interface (Q) entre un élément tournant (1) et un support (2) sur lequel ledit élément tourne, ledit procédé utilisant un ensemble de capteurs fixes aptes à délivrer trois signaux indépendants ($S_1$, $S_2$, $S_3$) représentatifs des efforts s'appliquant sur la bague fixe du roulement, ledit procédé comprenant une procédure itérative de traitement et une procédure d'étalonnage qui est réalisée avant la première itération de la procédure de traitement.

L'invention concerne également l'application d'un tel procédé au cas d'un pneu roulant sur une chaussée.

FIG.1

# EP 1 361 421 A1

**Description**

L'invention concerne un procédé de calcul des efforts appliqués à une interface entre un élément tournant et un support sur lequel ledit élément tourne.

L'invention s'applique notamment au cas où l'élément tournant est un pneu monté sur la roue d'un véhicule automobile, ledit pneu tournant sur une chaussée.

Lorsque l'on veut obtenir les efforts appliqués à l'interface entre le pneu et la chaussée de sorte à connaître le modèle de comportement dynamique du véhicule, il est possible, par exemple conformément au document FR-2 716 717, d'intégrer des dispositifs de type roue dynamométrique.

Mais ces dispositifs, outre leur coût souvent dissuasif dans le cadre d'une application en série pour l'industrie automobile, présentent des contraintes d'intégration mécanique importantes, notamment du fait qu'ils utilisent des transducteurs tournants.

Outre ces contraintes mécaniques qui doivent être limitées, il est également nécessaire de prévoir un procédé de calcul desdits efforts qui puisse être facilement étalonné de sorte à être parfaitement fiable.

L'invention vise à résoudre ces deux types de problèmes en prévoyant un procédé de calcul des efforts mentionnés ci-dessus, ledit procédé utilisant un ensemble de capteurs fixes, pouvant être étalonné de façon simple lors de sa mise en service, et mis en oeuvre de façon simple et fiable au moyen d'un calculateur électronique.

En outre, le procédé selon l'invention permet d'adapter le calcul des efforts à l'éventuelle déformation de l'élément tournant sous l'effet desdits efforts, ce qui permet d'obtenir un calcul particulièrement fiable dans le temps.

Ainsi, grâce à l'invention, il est notamment possible de connaître à tous moments le comportement dynamique du véhicule de sorte à pouvoir commander au moins un système d'assistance à la conduite de véhicule automobile, par exemple de type ABS (Antilock Brake System), TCS (Traction Control System), EBD (Electronic Brake force Distribution), ESP (Electronic Stability Program), ACC (Adaptative Cruise Control), DAE (Direction Assistée Electrique), BAS (Brake Assist System), BBW (Brake by Wire).

En particulier, dans un système de type ABS, le procédé selon l'invention permet, en calculant en continu et de façon fiable les efforts appliqués sur le pneu, de participer au raccourcissement des distances de freinage en permettant de piloter le freinage des roues juste avant leur blocage, ce qui correspond à la situation optimale de freinage.

A cet effet, et selon un premier aspect, l'invention propose un procédé de calcul des efforts $F_{xw}$, $F_{yw}$, $F_{zw}$ appliqués à une interface Q entre un élément tournant et un support sur lequel ledit élément tourne autour d'un axe Y, ledit élément étant associé à la bague tournante d'un roulement de sorte à tourner conjointement à elle, ledit procédé utilisant un ensemble de capteurs fixes aptes à délivrer trois signaux indépendants $S_1$, $S_2$, $S_3$ représentatifs des efforts s'appliquant sur la bague fixe du roulement et qui résultent des efforts $F_{xw}$, $F_{yw}$, $F_{zw}$, ledit procédé comprenant :

-   la procédure itérative de traitement prévoyant les étapes suivantes :

    -   acquisition des signaux $S_1$, $S_2$ et $S_3$ ;
    -   résolution du système (S) $S_i = (A_i \times F_{xw}) + (B_i \times F_{yw}) + (C_i \times F_{zw}) + k_i$ avec i = 1 à 3 de sorte à obtenir les valeurs de $F_{xw}$, $F_{yw}$ et $F_{zw}$ correspondant à chaque acquisition ; et
-   la procédure d'étalonnage qui est réalisée avant la première itération de la procédure de traitement et qui prévoie les étapes suivantes :

    -   détermination des constantes $k_i$ ;
    -   application à une interface $Q_1$ déterminée de successivement trois efforts $F_1$, $F_2$ et $F_3$ déterminés, de sorte, par acquisition des signaux $S_i$ et résolution des systèmes (S) correspondants, à déterminer des paramètres $A_i$, $B_i$ et $C_i$.

Selon un deuxième aspect, l'invention propose une application d'un tel procédé, au calcul des efforts $F_{xw}$, $F_{yw}$, $F_{zw}$ appliqués sur les pneus d'un véhicule automobile, ledit pneu tournant sur une chaussée.

D'autres objets et avantages de l'invention apparaîtront au cours de la description qui suit, faite en référence aux dessins annexés, dans lesquels :

-   la figure 1 est un schéma en perspective d'un élément tournant sur un support, ledit schéma montrant les conventions géométriques utilisées ;

-   la figure 2 est un schéma montrant les repères associés à deux interfaces de contact entre l'élément tournant et le support ;

-   la figure 3 représente en coupe la déformation d'un pneu sous l'effet d'un effort exercé ;

- les figures 4 et 5 sont des schémas synoptiques respectivement d'un premier et d'un deuxième modes de réalisation d'une étape de la procédure d'étalonnage ;

- les figures 6 à 8 sont des schémas synoptiques respectivement d'un premier, d'un deuxième et d'un troisième modes de réalisation de la procédure de traitement.

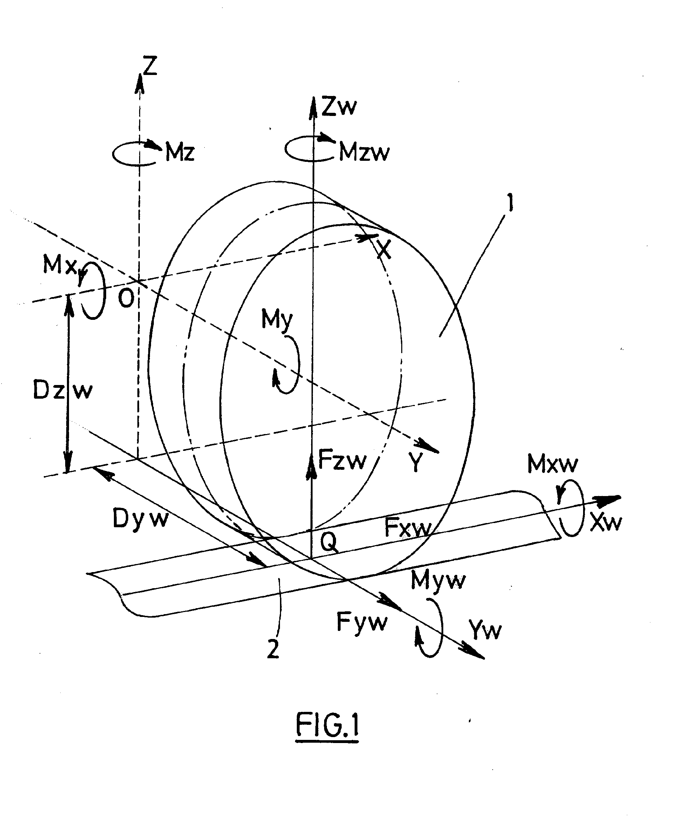

La figure 1 représente de façon schématique un élément tournant 1 sur un support 2. Dans un exemple particulier l'élément 1 est un pneu de véhicule automobile monté sur la jante d'une roue 3 et le support 2 représente la chaussée sur laquelle le véhicule roule.

De façon connue, la roue 3 est montée en rotation par rapport au véhicule au moyen d'un roulement comprenant une bague intérieure tournante à laquelle la roue 3 est associée, une bague extérieure fixe associée au véhicule et des corps roulants disposés entre lesdites bagues de sorte à permettre la rotation autour d'un axe Y.

Sous l'effet du roulement du véhicule sur la chaussée, des efforts $F_{xw}$, $F_{yw}$, $F_{zw}$ et des moments $M_{xw}$, $M_{yw}$, $M_{zw}$ sont générés à l'interface Q entre le pneu 1 et la chaussée 2. Notons que compte tenu des déformations de l'élément tournant 1 pouvant être provoquées par les efforts, l'interface Q n'est pas nécessairement positionnée au centre dudit élément mais peut être définie comme l'intersection entre le plan de l'élément tournant 1 et la projection verticale de l'axe de rotation sur le support 2.

Suivant l'invention, il est prévu un ensemble de capteurs fixes qui sont aptes à délivrer trois signaux indépendants $S_1$, $S_2$, $S_3$ représentatifs des efforts s'appliquant sur la bague fixe et qui résultent des efforts $F_{xw}$, $F_{yw}$ et $F_{zw}$, lesdits signaux étant traités par un calculateur électronique de sorte à permettre le calcul des efforts $F_{xw}$, $Fy_w$ et $F_{zw}$.

On peut se référer par exemple aux documents FR-2 812 356 et FR-2 812 355 issus de la demanderesse qui décrivent respectivement un roulement et un ensemble pourvus d'un tel ensemble de capteurs.

Un tel ensemble de capteurs peut être prévu sur chaque roue du véhicule de sorte, en mettant en oeuvre l'invention sur chacune d'elle, à connaître de façon indépendante leur comportement dynamique. A cet effet, un calculateur central peut être envisagé pour traiter de façon indépendante les signaux $S_1$, $S_2$, $S_3$ issus de chaque ensemble de capteurs.

En relation avec la figure 1, on définit :

- le référentiel orthogonal direct $(X_w, Y_w, Z_w)$ centré à l'interface Q, ledit référentiel étant associé à l'élément tournant 1 ;
- le référentiel orthogonal direct $(X, Y, Z)$ centré sur le point O sensiblement disposé sur l'axe du roulement, le plan $(X, Y)$ étant parallèle au plan du support 2 sur lequel se produit le roulement et le plan $(X, Z)$ étant un plan médian de l'élément sur lequel l'ensemble de capteurs est disposé.

Le torseur des charges extérieures s'appliquant sur l'élément tournant 1 au point Q peut alors s'écrire :

$$T_Q = \begin{bmatrix} F_{xw} & M_{xw} \\ F_{yw} & M_{yw} \\ F_{zw} & M_{zw} \end{bmatrix}_Q$$

$F_{xw}$, $F_{yw}$ et $F_{zw}$ étant respectivement les forces longitudinale, transversale et verticale qui s'appliquent sur l'élément tournant 1; $M_{xw}$, $M_{yw}$ et $M_{zw}$ étant respectivement les moments de renversement tendant à faire pivoter l'élément 1 autour de l'axe $X_w$, de roulement tendant à faire pivoter l'élément 1 autour de l'axe $Y_w$ et d'alignement tendant à faire pivoter l'élément 1 autour de l'axe $Z_w$.

Il est possible, tout en obtenant des résultats satisfaisants, de considérer que les moments $M_{xw}$, $M_{yw}$ et $M_{zw}$ sont négligeables par rapports aux efforts $F_{xw}$, $F_{yw}$ et $F_{zw}$ correspondants.

Le tenseur s'écrit alors :

$$T_Q = \begin{bmatrix} F_{xw} & 0 \\ F_{yw} & 0 \\ {}_Q\begin{matrix}F_{zw}\end{matrix} & 0 \end{bmatrix}$$

En posant, comme il apparaît sur la figure 1, que le vecteur OQ à comme coordonnées (0, $D_{yw}$, -$D_{zw}$) dans le référentiel (X, Y, Z), le tenseur des efforts $T_Q$ transféré au point O devient :

$$T_O = \begin{bmatrix} F_{xw} & (D_{yw} \times F_{zw} + D_{zw} \times F_{yw}) \\ F_{yw} & 0 \\ {}_O\begin{matrix}F_{zw}\end{matrix} & -(D_{yw} \times F_{xw}) \end{bmatrix}$$

En effet, en faisant l'hypothèse que le roulement est une liaison pivot parfaite, c'est-à-dire en négligeant les frottements internes au roulement, le couple créé par l'effort longitudinal $F_{yw}$ est nul au point O autour de l'axe Y.

Conformément à l'invention, les signaux $S_1$, $S_2$ et $S_3$ sont exprimés comme étant fonction des éléments du torseur d'efforts $T_O$, la contribution de ces derniers étant pondérée par un coefficient constant pour chaque élément du torseur.

C'est-à-dire le système (S) issu du torseur $T_O$ peut s'écrire :

$$S_1 = a_1 F_{xw} + b_1 F_{yw} + c_1 F_{zw} + d_1(D_{yw} \times F_{zw} + D_{zw} \times F_{yw}) + f_1(D_{yw} \times F_{xw}) + k_1$$

$$S2 = a_2 F_{xw} + b_2 F_{yw} + c_2 F_{zw} + d_2(D_{yw} \times F_{zw} + D_{zw} \times F_{yw}) + f_2(D_{yw} \times F_{xw}) + k_2$$

$$S_3 = a_3 F_{xw} + b_3 F_{yw} + c_3 F_{zw} + d_3(D_{yw} \times F_{zw} + D_{zw} \times F_{yw}) + f_3(D_{yw} \times F_{xw}) + k_3$$

Les coefficients $a_i$, $b_i$, $C_i$, $d_i$ et $f_i$ étant des constantes propres aux capteurs et donc indépendants de la position de l'interface Q.

On peut également écrire le système (S) sous la forme :

$$S_1 = (a_1 + f_1 \times D_{yw})F_{xw} + (b_1 + d_1 \times D_{zw})F_{yw} + (c_1 - d_1 \times D_{yw})F_{zw} + k_1$$

$$S_2 = (a_2 + f_2 \times D_{yw})F_{xw} + (b_2 + d_2 \times D_{zw})F_{yw} + (c_2 - d_2 \times D_{yw})F_{zw} + k_2$$

$$S_3 = (a_3 + f_3 \times D_{yw})F_{xw} + (b_3 + d_3 \times D_{zw})F_{yw} + (c_3 - d_3 \times D_{yw})F_{zw} + k_3$$

En posant les paramètres :

$$A_i = (a_i + f_i \times D_{yw})$$

$$B_i = (b_i + d_i \times D_{zw})$$

$$C_i = (c_i - d_i \times D_{yw})$$

avec i = 1 à 3, on peut écrire le système (S) sous la forme :

$$S_1 = A_1 \times F_{xw} + B_1 \times F_{yw} + C_1 \times F_{zw} + k_1$$

$$S_2 = A_2 \times F_{xw} + B_2 \times F_{yw} + C_2 \times F_{zw} + k_2$$

$$S_3 = A_3 \times F_{xw} + B_3 \times F_{yw} + C_3 \times F_{zw} + k_3$$

Cette écriture permet de simplifier les équations et d'exprimer les signaux $S_1$, $S_2$, $S_3$ uniquement en fonction des efforts $F_{xw}$, $F_{yw}$, $F_{zw}$.

Les solutions de ce système s'écrivent alors :

$$\begin{bmatrix} F_{xw} \\ F_{yw} \\ F_{zw} \end{bmatrix} = \frac{1}{\det(M)} \begin{bmatrix} (B_2 C_3 - B_3 C_2) & (B_3 C_1 - B_1 C_3) & (B_1 C_2 - B_2 C_1) \\ (B_3 C_1 - B_1 C_3) & (A_1 C_3 - A_3 C_1) & (A_1 B_3 - A_3 B_1) \\ (A_2 B_3 - A_3 B_2) & (A_3 B_1 - A_1 B_3) & (A_1 B_2 - A_2 B_1) \end{bmatrix} \begin{bmatrix} (S_1 - k_1) \\ (S_2 - k_2) \\ (S_3 - k_3) \end{bmatrix}$$

avec $\det(M) = A_1 B_2 C_3 + A_2 B_3 C_1 + A_3 B_1 C_2 - A_3 B_2 C_1 - A_1 B_3 C_2 - A_2 B_1 C_3$

Il est donc possible, en résolvant le système (S), de calculer les valeurs des efforts $F_{xw}$, $F_{yw}$, $F_{zw}$ à partir des signaux $S_1$, $S_2$, $S_3$ mesurés.

Pour ce faire, il est alors nécessaire de déterminer les constantes $k_i$ ainsi que les paramètres $A_i$, $B_i$, $C_i$ avec i = 1 à 3.

Cette détermination est réalisée de façon initiale lors d'une procédure d'étalonnage qui est réalisée préalablement à la mise en service du dispositif de calcul des efforts $F_{xw}$, $F_{yw}$, $F_{zw}$, ou de façon ponctuelle par exemple lors de l'entretien du véhicule.

A cet effet, la procédure d'étalonnage comprend comme première étape, la détermination des constante $k_i$ avec i = 1 à 3 qui peut être réalisée sous effort nul en mesurant les signaux $S_1$, $S_2$, $S_3$ qui sont alors égaux respectivement à $k_1$, $k_2$, $k_3$, lesdites valeurs des $k_i$ étant alors soit enregistrées dans le calculateur, soit annulées en réglant l'offset des capteurs, par exemple dans l'EEPROM du calculateur, de sorte à annuler les signaux $S_1$, $S_2$, $S_3$ sous couple nul.

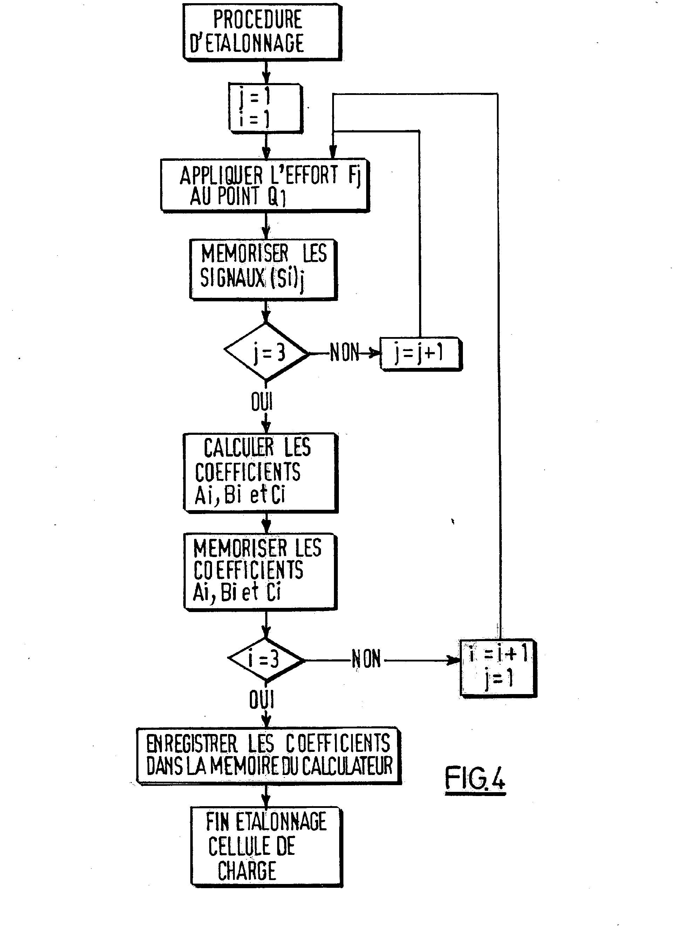

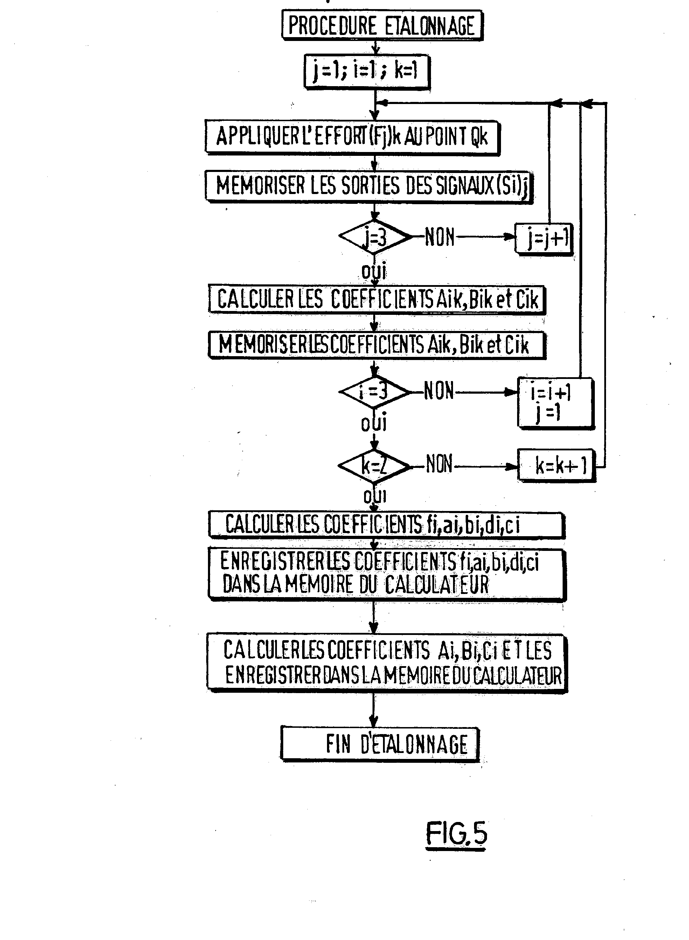

Dans une deuxième étape, représentée selon un premier et un deuxième modes de réalisation respectivement sur les figures 4 et 5, on détermine les paramètres $A_i$, $B_i$, $C_i$ avec i = 1 à 3.

Selon le premier mode de réalisation, on applique successivement trois efforts déterminés $F_1$, $F_2$ et $F_3$ à une interface $Q_1$, lesdits efforts ayant pour composantes dans le repère (X, Y, Z) respectivement ($F_{x1}$, $F_{y1}$, $F_{z1}$), ($F_{x2}$, $F_{y2}$, $F_{z2}$), ($F_{x3}$, $F_{y3}$, $F_{z3}$).

Pour chacun des signaux $S_i$, i = 1 à 3, le système (S) s'écrit alors :

$$\begin{bmatrix} F_{x1} & F_{y1} & F_{z1} \\ F_{x2} & F_{y2} & F_{z2} \\ F_{x3} & F_{y3} & F_{z3} \end{bmatrix} \times \begin{bmatrix} A_i \\ B_i \\ C_i \end{bmatrix} = \begin{bmatrix} (S_i)_{F1} - k_i \\ (S_i)_{F2} - k_i \\ (S_i)_{F3} - k_i \end{bmatrix}$$

soit :

$$\begin{bmatrix} A_i \\ B_i \\ C_i \end{bmatrix} = \begin{bmatrix} F_{x1} & F_{y1} & F_{z1} \\ F_{x2} & F_{y2} & F_{z2} \\ F_{x3} & F_{y3} & F_{z3} \end{bmatrix}^{-1} \times \begin{bmatrix} (S_i)_{F1} - k_i \\ (S_i)_{F2} - k_i \\ (S_i)_{F3} - k_i \end{bmatrix}$$

c'est-à-dire :

$$\begin{bmatrix} A_i \\ B_i \\ C_i \end{bmatrix} = \frac{1}{\det(T)} \begin{bmatrix} (F_{y2}F_{z3} - F_{y3}F_{z2}) & (F_{y3}F_{z1} - F_{y1}F_{z3}) & (F_{y1}F_{z2} - F_{y2}F_{z1}) \\ (F_{x2}F_{z3} - F_{x3}F_{z2}) & (F_{x1}F_{z3} - F_{x3}F_{z1}) & (F_{x2}F_{z1} - F_{x1}F_{z2}) \\ (F_{x2}F_{y3} - F_{x3}F_{y2}) & (F_{x3}F_{y1} - F_{x1}F_{y3}) & (F_{x1}F_{y2} - F_{x2}F_{y1}) \end{bmatrix} \times \begin{bmatrix} (S_i)_{F1} - k_i \\ (S_i)_{F2} - k_i \\ (S_i)_{F3} - k_i \end{bmatrix}$$

avec $\det(T) = F_{x1}F_{y2}F_{z3} + F_{x2}F_{y3}F_{z1} + F_{x3}F_{y1}F_{z2} - F_{x3}F_{y2}F_{z1} - F_{x1}F_{y3}F_{z2} - F_{x2}F_{y1}F_{z3}$ et $(S_i)_{Fj}$ est le signal $S_i$ induit par l'effort $F_j$, i et j étant compris entre 1 et 3.

Par résolution du système (S) ainsi posé, on obtient donc directement la valeur des paramètres $A_i$, $B_i$, $C_i$ avec i = 1 à 3.

Ainsi, ces paramètres peuvent être mémorisés dans le calculateur de sorte, lors de la procédure de traitement, à pouvoir calculer directement les efforts $F_{xw}$, $F_{yw}$, $F_{zw}$ à partir des mesures de $S_1$, $S_2$, $S_3$ par résolution du système (S), et ce de façon itérative.

Suivant cette réalisation, les efforts $F_{xw}$, $F_{yw}$, $F_{zw}$ calculés sont indépendants de la position de l'interface Q qui est donc considérée comme identique à celle de $Q_1$. Cette réalisation s'applique donc typiquement soit au cas où l'élément tournant 1 est indéformable sous l'effet des efforts $F_{xw}$, $F_{yw}$, $F_{zw}$, soit au cas où l'élément tournant 1 est sensiblement indéformable de sorte que les variations d'efforts induites par le déplacement de l'interface Q sont considérées comme négligeables dans l'application considérée, par exemple du fait qu'une précision de mesure élevée n'est pas exigée ou que les efforts exercés sur l'élément tournant 1 ne sont pas très importants.

Dans le cas contraire, le procédé selon l'invention permet dans le calcul des efforts $F_{xw}$, $F_{yw}$, $F_{zw}$ de tenir compte, au moins partiellement, des déformations de l'élément tournant 1 qui sont induites par les efforts $F_{xw}$, $F_{yw}$, $F_{zw}$.

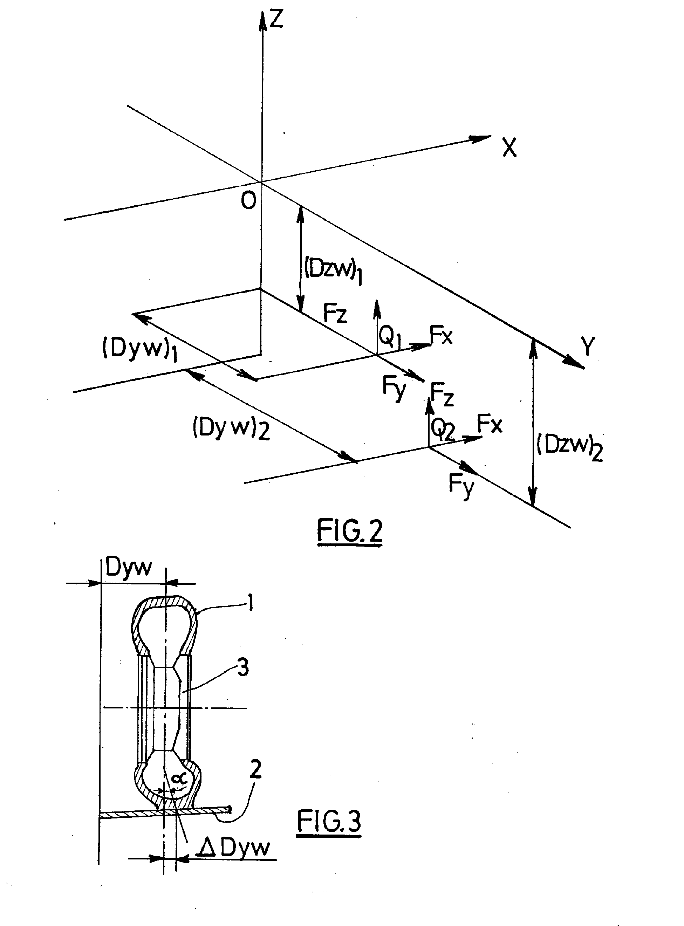

A cet effet, et selon le deuxième mode de réalisation de la deuxième étape de la procédure d'étalonnage représenté sur la figure 5, il est prévu d'appliquer à une interface $Q_2$ déterminée (voir figure 2) trois efforts F'1, F'2 et F'3 de sorte, de façon analogue à celle présentée dans le cadre du premier mode de réalisation, à obtenir les paramètres Ai, Bi, Ci qui correspondent à l'interface $Q_2$.

Ainsi, et compte tenu du fait que :

$$A_i = (a_i + f_i \times D_{yw})$$

$$B_i = (b_i + d_i \times D_{zw})$$

$$C_i = (c_i - d_i \times D_{yw})$$

on obtient :

$$f_i = \frac{(A_i)_1 - (A_i)_2}{(D_{yw})_1 - (D_{yw})_2}$$

$$a_i = (A_i)_1 - f_i \times (D_{yw})_1$$

$$d_i = \frac{(B_i)_1 - (B_i)_2}{(D_{zw})_1 - (D_{zw})_2}$$

$$b_i = (B_i)_1 - d_i \times (D_{zw})_1$$

$$c_i = (C_i)_1 - d_i \times (D_{yw})_1$$

Les indices 1 et 2 correspondant respectivement aux paramètres $A_i$, $B_i$, $C_i$ et aux positions $D_{yw}$ et $D_{zw}$ pour les interfaces $Q_1$ et $Q_2$.

On obtient donc par le calcul les constantes $f_i$, $a_i$, $d_i$, $b_i$, $c_i$ qui sont indépendantes de la position de l'interface considérée.

Ainsi, en enregistrant ces constantes dans le calculateur, on peut obtenir un procédé de calcul des efforts $F_{xw}$, $F_{yw}$, $F_{zw}$ qui tienne compte de la variation de la position de l'interface Q sous l'effet desdits efforts.

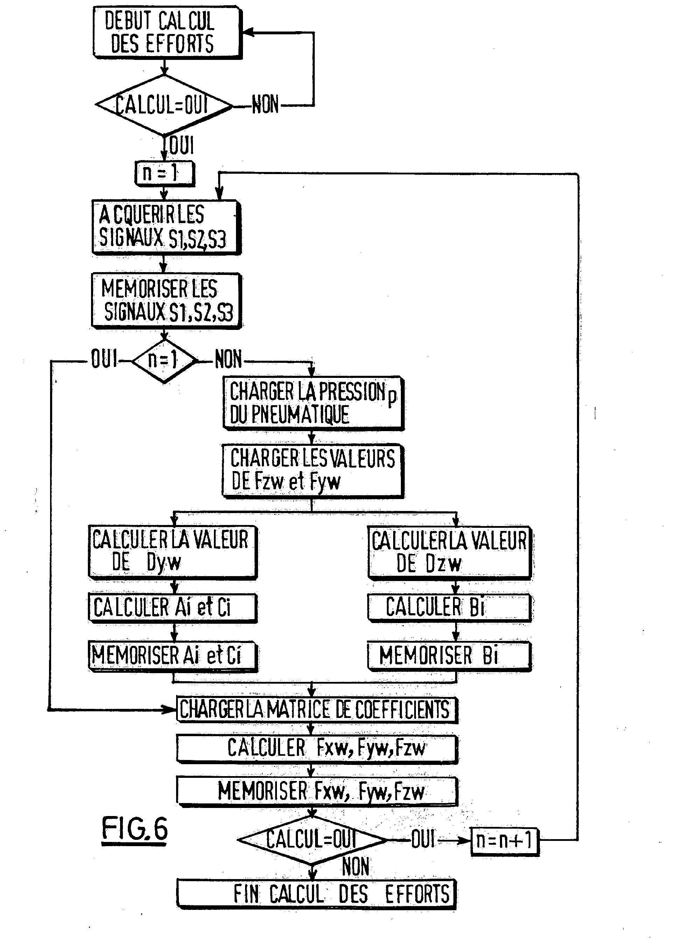

En relation avec la figure 6, on décrit un premier mode de réalisation d'une telle procédure itérative de traitement des signaux $S_1$, $S_2$, $S_3$.

Après la procédure d'étalonnage, les signaux $S_1$, $S_2$, $S_3$ sont mesurés puis mémorisés dans le calculateur.

Lors de la première itération (n = 1), les paramètres $A_i$, $B_i$, $C_i$ mémorisés lors de la procédure d'étalonnage sont utilisés pour calculer $F_{xw}$, $F_{yw}$, $F_{zw}$ par résolution du système (S) comme indiqué ci-dessus.

Ensuite (lorsque n > 1), à chaque itération, au moins une, par exemple les deux dans le mode de réalisation représenté sur la figure 6, coordonnée de déplacement de l'interface Q est calculée. En variante, ce calcul peut être effectué selon une périodicité différente en fonction des contraintes spécifiques de l'application considérée.

A cet effet, un modèle de déformation de l'élément tournant 1 est mémorisé dans le calculateur de sorte, pour chaque valeur de $F_{xw}$, $F_{yw}$, $F_{zw}$, à connaître la déformation induite de l'élément tournant 1. A cet effet, il peut être envisagé de mémoriser un modèle de déformation lors de la mise en service du véhicule et éventuellement de pouvoir en changer si un type de pneu 1 très différent est utilisé ultérieurement.

En particulier, dans le cas d'un pneu, le déplacement $\Delta D_{yw}$ de l'interface Q peut être estimé par $R/2\tan(\alpha)$, R étant le rayon du pneu 1 et $\alpha$ étant son angle dit de dérive (voir figure 3), et pour un pneu 1 donné, la variation de $\alpha$ en fonction du rapport $F_{yw}/F_{zw}$ est connue pour une pression p dans le pneu donnée.

Ainsi, il est possible de calculer $\Delta D_{yw}$ en fonction du rapport $F_{yw}/F_{zw}$ calculé lors de l'itération précédente.

En outre, toujours dans le cas d'un pneu donné, et sur la base de la mesure de la pression p, le déplacement $\Delta D_{zw}$ qui correspond à la variation du rayon du pneu 1 est également connu en fonction des efforts $F_{xw}$, $F_{yw}$, $F_{zw}$.

Ainsi, il est possible après la première itération et la mesure de la pression p, de calculer $\Delta D_{yw}$ et $\Delta D_{zw}$, de les additionner respectivement à $D_{yw}$ et $D_{zw}$, de calculer les nouveaux paramètres $A_i$, $B_i$, $C_i$ qui correspondent à cette nouvelle interface ($A_i$, $C_i$ étant fonction uniquement de $D_{yw}$ et $B_i$ étant uniquement fonction de $D_{zw}$), de mémoriser ces nouveaux paramètres puis de calculer, avec eux, les nouveaux efforts $F_{xw}$, $F_{yw}$, $F_{zw}$ correspondants aux signaux $S_1$, $S_2$, $S_3$ mesurés.

Ainsi, le procédé permet, en continu, de tenir compte des déplacements de l'interface Q induits par les efforts $F_{xw}$, $F_{yw}$, $F_{zw}$, de sorte à améliorer la fiabilité dans le temps des calculs obtenus.

En variante, et selon les contraintes spécifiques de l'application considérée, il est possible de ne tenir compte que du déplacement dans une direction à savoir $\Delta D_{yw}$ ou $\Delta D_{zw}$ de sorte à ne recalculer respectivement que les paramètres $A_i$, $C_i$ ou $B_i$, ou encore de prévoir une périodicité de calcul différente pour ces deux types de paramètres.

Selon une autre variante, il peut être prévu de comparer les valeurs de $\Delta D_{yw}$ et/ou $\Delta D_{zw}$ avec respectivement les valeurs de $D_{yw}$ et/ou $D_{zw}$ de sorte à déclencher le recalcul des paramètres $A_i$, $C_i$ ou $B_i$ correspondants uniquement si les variations de coordonnées sont supérieures à un certain seuil.

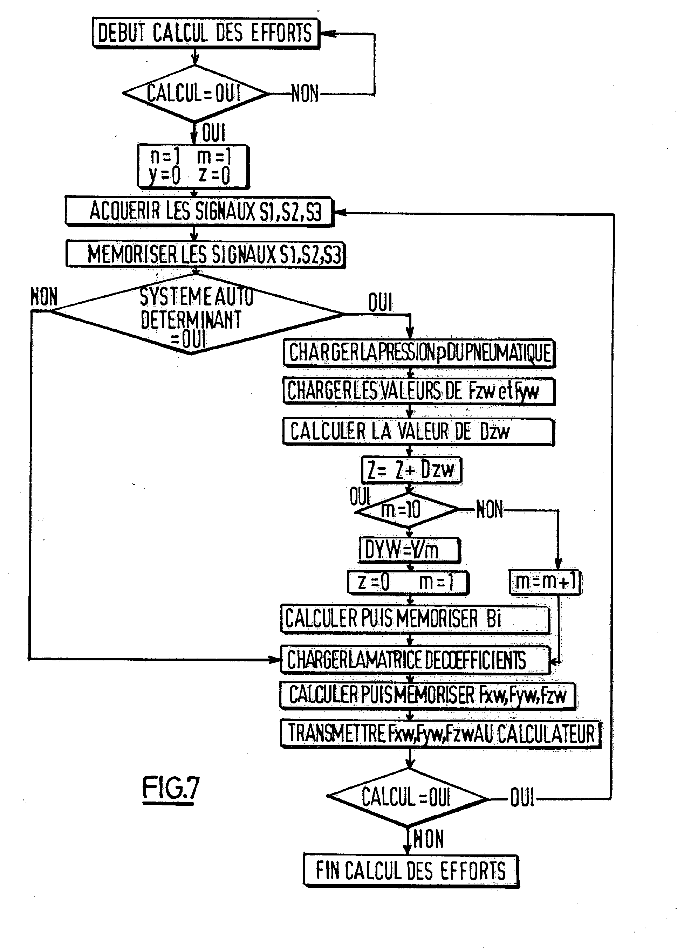

Le mode de réalisation représenté sur la figure 7 diffère de celui de la figure 6 en ce que le procédé prévoit uniquement de recalculer en continu le paramètre $B_i$, ledit calcul étant réitéré dix fois puis moyenné avant d'être utilisé pour le calcul des efforts $F_{xw}$, $F_{yw}$, $F_{zw}$ lors des dix itérations ultérieures, de sorte à améliorer la précision dudit calcul.

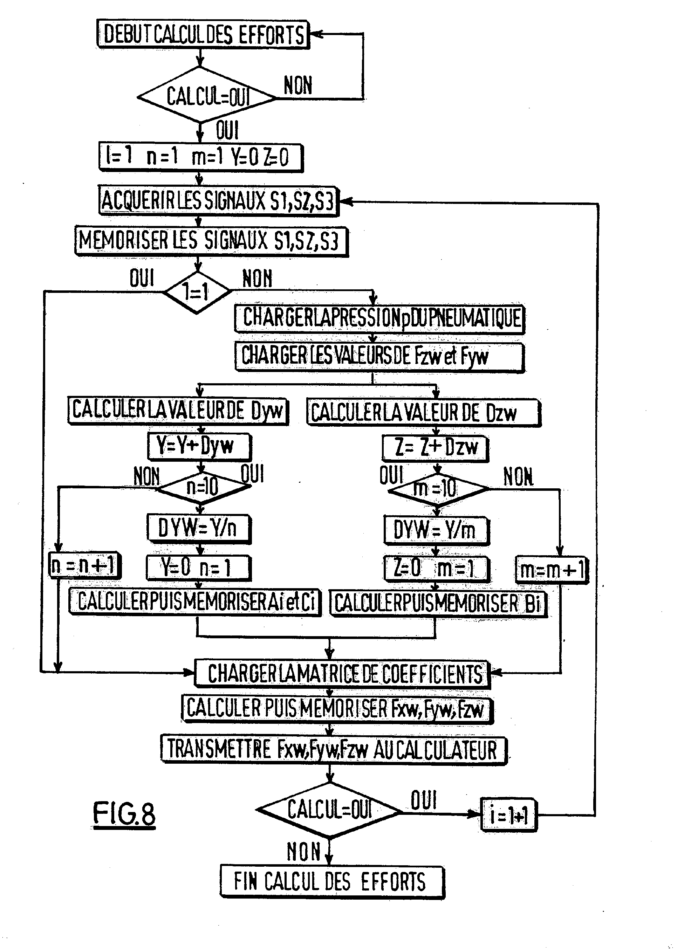

Le mode de réalisation représenté sur la figure 8 diffère de celui de la figure 7 en ce que le procédé prévoit en outre de recalculer en continu les paramètres $A_i$, $C_i$, lesdits calculs étant réitérés dix fois puis moyennés avant d'être utilisés pour le calcul des efforts $F_{xw}$, $F_{yw}$, $F_{zw}$ lors des dix itérations ultérieures, de sorte à améliorer encore la précision dudit calcul.

L'invention permet également de calculer les moments $M_x$ et $M_z$ au point O grâce aux formules suivantes :

$$M_x = F_{zw} \times D_{yw} + F_{yw} \times D_{zw}$$

$$Mz = F_{xw} \times D_{yw}$$

**Revendications**

1. Procédé de calcul des efforts ($F_{xw}$, $F_{yw}$, $F_{zw}$) appliqués à une interface (Q) entre un élément tournant (1) et un support (2) sur lequel ledit élément tourne autour d'un axe Y, ledit élément étant associé à la bague tournante d'un roulement de sorte à tourner conjointement à elle, ledit procédé utilisant un ensemble de capteurs fixes aptes à délivrer trois signaux indépendants ($S_1$, $S_2$, $S_3$) représentatifs des efforts s'appliquant sur la bague fixe du roulement et qui résultent des efforts ($F_{xw}$, $F_{yw}$, $F_{zw}$,) ledit procédé comprenant :

   - la procédure itérative de traitement prévoyant les étapes suivantes :

   - acquisition des signaux ($S_1$, $S_2$, $S_3$) ;
   - résolution du système (S) $S_i = (A_i \times F_{xw}) + (B_i \times F_{yw}) + (C_i \times F_{zw}) + k_i$ avec i = 1 à 3 de sorte à obtenir les valeurs des efforts ($F_{xw}$, $F_{yw}$ et $F_{zw}$) correspondant à chaque acquisition ; et
   - la procédure d'étalonnage qui est réalisée avant la première itération de la procédure de traitement et qui prévoie les étapes suivantes :

   - détermination des constantes $k_i$ ;
   - application à une interface ($Q_1$) déterminée de successivement trois efforts ($F_1$, $F_2$, $F_3$) déterminés, de sorte, par acquisition des signaux ($S_i$) et résolution des systèmes (S) correspondants, à déterminer des paramètres $A_i$, $B_i$ et $C_i$.

2. Procédé selon la revendication 1, **caractérisé en ce que** la procédure d'étalonnage comprend en outre les étapes suivantes :

   - application à une interface ($Q_2$) déterminée de successivement trois efforts ($F'_1$, $F'_2$, $F'_3$) déterminés, de sorte, par acquisition des signaux ($S_i$) et résolution des systèmes (S) correspondants , à déterminer les paramètres $A_i$, $B_i$, et $C_i$ qui s'appliquent à l'interface ($Q_2$);
   - détermination des constantes de calcul des paramètres $A_i$, $B_i$ et $C_i$ qui sont indépendantes des coordonnées de l'interface (Q).

3. Procédé selon la revendication 1 ou 2, **caractérisé en ce que** la détermination des constantes $k_i$ est réalisée sous effort nul.

4. Procédé selon la revendication 3, **caractérisé en ce que** les constantes $k_i$ sont fixées à zéro par réglage de l'offset des capteurs.

5. Procédé selon la revendication 2, **caractérisé en ce que**, lors de la procédure de traitement, au moins l'une des coordonnées de déplacement de l'interface (Q) est calculée de façon périodique à partir d'un modèle de déformation de l'élément tournant (1) en fonction des efforts ($F_{xw}$, $F_{yw}$, $F_{zw}$) calculés.

6. Procédé selon la revendication 5, **caractérisé en ce que**, lors de la procédure de traitement, au moins l'un des paramètres $A_i$, $B_i$ et $C_i$ est calculé au moyen de l'au moins une coordonnée de déplacement calculée.

7. Procédé selon la revendication 6, **caractérisé en ce que** l'au moins un des paramètres $A_i$, $B_i$ et $C_i$ calculé est utilisé pour la résolution du système (S).

8. Procédé selon la revendication 6, **caractérisé en ce que** le calcul de l'au moins un des paramètres $A_i$, $B_i$ et $C_i$ est moyenné sur plusieurs mesures de sorte à utiliser ladite moyenne dans la résolution du système (S).

9. Application d'un procédé selon l'une quelconque des revendications 1 à 8, au calcul des efforts ($F_{xw}$, $F_{yw}$, $F_{zw}$) appliqués sur les pneus d'un véhicule automobile, lesdits pneus tournant sur une chaussée.

10. Application selon la revendication 9 lorsqu'elle dépend de l'une quelconque des revendications 5 à 8, **caractérisée en ce que** le modèle de déformation du pneu est déterminé notamment en fonction de la pression (p) mesurée dans ledit pneu.

**11.** Application selon la revendication 9 ou 10, **caractérisée en ce que** les efforts ($F_{xw}$, $F_{yw}$, $F_{zw}$) sont utilisés dans au moins un système d'assistance à la conduite du véhicule automobile.

FIG.1

FIG.2

FIG.3

```
        ┌─────────────────┐
        │   PROCEDURE     │
        │  D'ETALONNAGE   │
        └────────┬────────┘
                 │
            ┌────┴────┐
            │  j = 1  │◄──────────────────────┐
            │  i = 1  │                        │
            └────┬────┘                        │
                 │                             │
        ┌────────┴────────┐                    │
        │ APPLIQUER L'EFFORT Fj │◄──────┐      │
        │   AU POINT Q1   │            │      │
        └────────┬────────┘            │      │
                 │                     │      │
        ┌────────┴────────┐            │      │
        │ MEMORISER  LES  │            │      │
        │  SIGNAUX (Si)j  │            │      │
        └────────┬────────┘            │      │
                 │                     │      │
              ╱─────╲      NON    ┌────┴───┐  │
             ╱ j = 3 ╲──────────► │ j = j+1│  │
              ╲─────╱             └────────┘  │
                 │ OUI                        │
        ┌────────┴────────┐                   │
        │  CALCULER LES   │                   │
        │  COEFFICIENTS   │                   │
        │  Ai, Bi et Ci   │                   │
        └────────┬────────┘                   │
                 │                            │
        ┌────────┴────────┐                   │
        │ MEMORISER LES   │                   │
        │  COEFFICIENTS   │                   │
        │  Ai, Bi et Ci   │                   │
        └────────┬────────┘                   │
                 │                            │
              ╱─────╲      NON    ┌───────┐   │
             ╱ i = 3 ╲──────────► │ i = i+1│──┘
              ╲─────╱             │  j = 1 │
                 │ OUI            └────────┘
        ┌────────┴────────────────────┐
        │ ENREGISTRER LES COEFFICIENTS │
        │ DANS LA MEMOIRE DU CALCULATEUR│
        └────────┬────────────────────┘
                 │
        ┌────────┴────────┐
        │  FIN ETALONNAGE │
        │   CELLULE DE    │
        │     CHARGE      │
        └─────────────────┘
```

FIG.4

PROCEDURE ETALONNAGE

$j=1$ ; $i=1$ ; $k=1$

APPLIQUER L'EFFORT $(F_j)k$ AU POINT $Q_k$

MEMORISER LES SORTIES DES SIGNAUX $(S_i)j$

$j=3$ —NON—→ $j=j+1$

oui

CALCULER LES COEFFICIENTS $A_{ik}$, $B_{ik}$ et $C_{ik}$

MEMORISER LES COEFFICIENTS $A_{ik}$, $B_{ik}$ et $C_{ik}$

$i=3$ —NON—→ $i=i+1$ $j=1$

oui

$k=2$ —NON—→ $k=k+1$

oui

CALCULER LES COEFFICIENTS $f_i$, $a_i$, $b_i$, $d_i$, $c_i$

ENREGISTRER LES COEFFICIENTS $f_i$, $a_i$, $b_i$, $d_i$, $c_i$ DANS LA MEMOIRE DU CALCULATEUR

CALCULER LES COEFFICIENTS $A_i$, $B_i$, $C_i$ ET LES ENREGISTRER DANS LA MEMOIRE DU CALCULATEUR

FIN D'ETALONNAGE

FIG.5

EP 1 361 421 A1

FIG.6

14

DEBUT CALCUL DES EFFORTS

CALCUL = OUI —NON

OUI

$n=1 \quad m=1$
$y=0 \quad z=0$

ACQUERIR LES SIGNAUX S1,S2,S3

MEMORISER LES SIGNAUX S1,S2,S3

NON — SYSTEME AUTO DETERMINANT =OUI — OUI

CHARGER LA PRESSION p DU PNEUMATIQUE

CHARGER LES VALEURS DE Fzw et Fyw

CALCULER LA VALEUR DE Dzw

$Z = Z + Dzw$

OUI — $m = 10$ — NON

$DYW = Y/m$

$z = 0 \quad m = 1$

$m = m + 1$

CALCULER PUIS MEMORISER Bi

CHARGER LA MATRICE DE COEFFICIENTS

CALCULER PUIS MEMORISER Fxw,Fyw,Fzw

TRANSMETTRE Fxw,Fyw,Fzw AU CALCULATEUR

**FIG.7**

CALCUL = OUI — OUI

NON

FIN CALCUL DES EFFORTS

FIG.8

# EP 1 361 421 A1

**Office européen des brevets** . **RAPPORT DE RECHERCHE EUROPEENNE**

Numéro de la demande

EP 03 29 1080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | WO 01 77634 A (THE TIMKEN COMPANY) 18 octobre 2001 (2001-10-18) * abrégé * * page 1, ligne 4 - ligne 9; revendication 25; figures * --- | 1-4,9,11 | G01L5/16 |
| Y | US 4 748 844 A (H. YOSHIKAWA ET AL.) 7 juin 1988 (1988-06-07) * abrégé * * colonne 7, ligne 19 - colonne 9, ligne 58; figures * --- | 1-4,9,11 | |
| A | EP 0 432 122 A (SKF NOVA AB) 12 juin 1991 (1991-06-12) * abrégé * * colonne 4, ligne 10 - ligne 24; figures * ----- | 1,9 | |

**DOMAINES TECHNIQUES RECHERCHES (Int.Cl.7)**

G01L

Le présent rapport a été établi pour toutes les revendications

| Lieu de la recherche | Date d'achèvement de la recherche | Examinateur |
|---|---|---|
| LA HAYE | 15 août 2003 | Van Assche, P |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

17

**ANNEXE AU RAPPORT DE RECHERCHE EUROPEENNE**
**RELATIF A LA DEMANDE DE BREVET EUROPEEN NO.**          EP 03 29 1080

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
*Les renseignements fournis sont donnés à titre indicatif et n'engagent pas la responsabilité de l'Office européen des brevets.*

15–08–2003

| Document brevet cité au rapport de recherche | | | Date de publication | Membre(s) de la famille de brevet(s) | | Date de publication |
|---|---|---|---|---|---|---|
| WO | 0177634 | A | 18–10–2001 | AU | 5092701 A | 23–10–2001 |
| | | | | WO | 0177634 A2 | 18–10–2001 |
| | | | | US | 2002092360 A1 | 18–07–2002 |
| US | 4748844 | A | 07–06–1988 | JP | 62263434 A | 16–11–1987 |
| | | | | DE | 3715472 A1 | 12–11–1987 |
| | | | | FR | 2598505 A1 | 13–11–1987 |
| | | | | GB | 2190201 A ,B | 11–11–1987 |
| EP | 432122 | A | 12–06–1991 | EP | 0432122 A2 | 12–06–1991 |
| | | | | JP | 3209016 A | 12–09–1991 |

EPO FORM P0460

Pour tout renseignement concernant cette annexe : voir Journal Officiel de l'Office européen des brevets, No.12/82